Europäisches Patentamt

European Patent Office

Office européen des brevets

(11) Publication number: **0 083 853**
**A2**

# EUROPEAN PATENT APPLICATION

(21) Application number: 82306630.3

(22) Date of filing: 13.12.82

(51) Int. Cl.³: **G 03 B 27/32**
**G 03 B 27/68**

(30) Priority: 05.01.82 GB 8200176

(43) Date of publication of application:
20.07.83 Bulletin 83/29

(84) Designated Contracting States:
AT BE CH DE FR IT LI LU NL SE

(71) Applicant: THE MARCONI COMPANY LIMITED
Marconi House New Street
Chelmsford Essex CM1 1PL(GB)

(72) Inventor: Heard, Maurice Clifford
Sherridan Lodge 40, Elm Grove
Hullbridge Essex(GB)

(72) Inventor: Jolliffe, Sidney Arthur Walter
Crossways Acacia Drive
Malden Essex(GB)

(74) Representative: Tolfree, Roger Keith
GEC p.l.c. Central Patents Department Chelmsford
Office Marconi Research Centre West Hanningfield Road
Great Baddow Chelmsford Essex CM2 8HN(GB)

(54) Photographic enlarger.

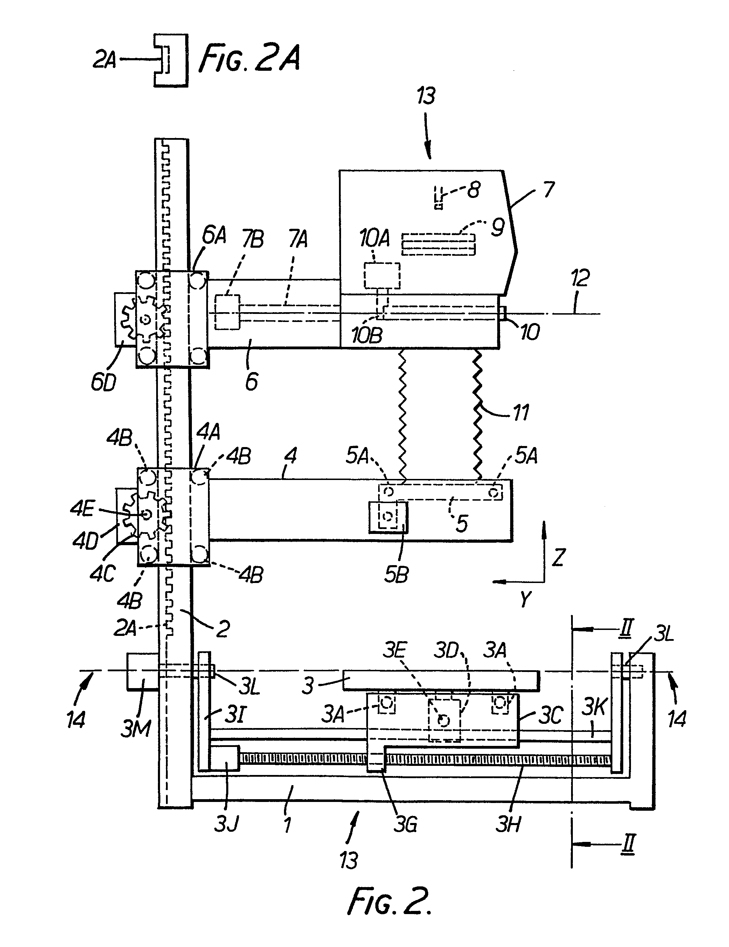

(57) In order to allow the effects of perspective to be adjusted when printing photographs from a negative an enlarger, such as that illustrated (Fig.2) allows a holder 10 for the negative and a support 3 for the photosensitive paper to be tilted about respective axes 13 and 12. A lens 5 is also allowed to be adjusted in a horizontal direction perpendicular to the axes 12 and 13 whilst the holder 10 for the negative is mounted for rotation about a vertical axis 14.

The Specification suggests that these various adjustments allow appropriate adjustments in perspective to be made without substantially affecting the focus on the photosensitive paper of any part of the picture to be reproduced.

FIG. 2.

## PHOTOGRAPHIC ENLARGER

This invention relates to a photographic enlarger and arose in the design of an enlarger specifically intended for producing prints in which perspective effects present in a negative can be eliminated or changed. Such adjustment is sometimes required for artistic purposes. It is also required where different photographs are taken of the same subject from different angles and when it is required to establish what changes occurred between the times when the photographs were taken. It is then required to adjust one or both photographs so as to eliminate those differences resulting entirely from the differences between the angles of view. In aerial survey work, where photographs are taken of adjacent overlapping areas it may also be necessary to adjust the perspective so that the overlapping parts exactly coincide with each other.

This invention provides a photographic enlarger comprising a light source for providing a beam of light along an optical path, a holder for supporting the negative in the said light path, focussing means for focussing light after passage through the negative, a support for supporting a light sensitive element where it can be exposed to light focussed by the lens, means for tilting the negative holder and the support about respective axes transverse to the light path, and means for adjusting the focussing means laterally with respect to the light path. By suitably tilting the negative holder and the support of the light sensitive element and by laterally adjusting the focussing means it is possible to achieve desired perspective adjustments whilst still maintaining all parts of the photographic reproduction in correct focus. If, as is preferred, means is provided for rotating the holder for the negative about an axis normal to the negative plane only one axis of tilt need be provided for the negative holder and one axis of tilt for the said support. This considerably simplifies the mechanical design.

In order to provide for adjustable magnification, the distance between the negative holder and the support; and the distance between the focussing means and the support are both preferably adjustable. The support may be mounted for movement in two orthogonal directions parallel to the photosensitive member or perpendicular to the light path.

One way in which the invention may be performed will now be described by way of example with reference to the accompanying drawings in which:-

Figure 1 is a front elevation of a photographic enlarger constructed in accordance with the invention;

Figure 2 is a side elevation of the enlarger shown in Figure 1 and shown partly as a cross section through the Plane II-II if Figure 1; and Figure 2A is a plan view of an upright shown at 2 on Figures 1 and 2.

Referring to both drawings, the illustrated enlarger comprises a stand consisting of a base 1.and an upright 2. The base 1 carries a baseboard 3 which constitutes a support for a photosensitive member which will normally be a photosenstive paper.

Arms 4 are mounted in a carriage 4A which slides up and down the upright 2, being guided by rollers 4B which bear against opposite sides of the upright 6. A toothed wheel 4C is driven by a stepping motor 4D about an axis 4E. The wheel 4C engages teeth 2A in a recess extending along the upright thereby driving the carriage 4A to a desired position. The motor 4D thus constitutes adjustment means allowing the arms 4 to be moved and retained at a desired level.

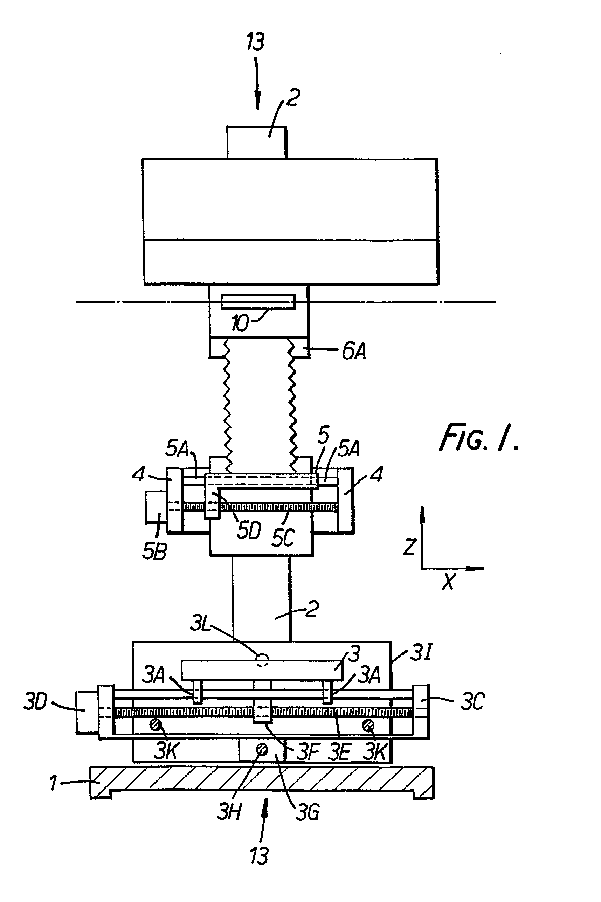

The arms 4 support slides 5A on which focussing means in the form of a lens assembly 5 is able to slide in the X direction as indicated on Figure 1. Adjustment in this direction is controlled by a second stepping motor 5B which drives a lead screw 5C engaging a complementary thread in a lug 5D fixed to the lens assembly 5. This is best seen on Figure 1.

A second arm 6 is attached to a carriage 6A mounted in a similar way to the carriage 4A so that it can slide up and down the upright 2 under the control of a stepping motor 6D. The arm 6 carries a light box 7 which contains a light source 8 and collimating lenses 9. The light box 7 also supports a negative holder 10. The light box is connected to the lens assembly 5 by a flexible, opaque, corrugated tube 11 which prevents stray light from reaching the lens assembly 5.

The light box 7 is fixed to a shaft 7A which rotates in the arm 6 under the control of a further stepping motor 7B housed within the arm 6. The whole light box 7 complete with negative holder can thus be rotated about an axis 12 passing through the lens assembly. The negative holder can however also ﹒ rotate relative to the rest of the light box about an axis perpendicular to the plane of the negative. This axis is the same as the vertical axis 13 when the negative is in a horizontal plane as illustrated. Such rotation of the negative holder is effected by another stepping motor 10A having a spherical shaft 10B which engages teeth on the periphery of the negative holder.

The baseboard 3 can be adjusted in two orthogonal directions by sliding in the X and Y directions and can also be tilted from its illustrated horizontal position about a horizontal axis 14 parallel to the axis 12 and passing through a plane defined by the top surface of the baseboard 3 i.e. the plane in which the photosensitive paper is held. The means for adjusting the baseboard 3 will now be described in more detail.

The baseboard 3 has lugs 3A through which slides 3B pass, these slides being supported on a carriage 3C. Also supported on the carriage is a stepping motor 3D which drives a lead screw 3E. This co-operates with a corresponding thread in a lug 3F fixed to the baseboard. Thus the motor 3D can be used to drive the baseboard 3 in the X direction.

The carriage 3C has an internally threaded lug 3G which co-operates with a lead screw 3H supported on a cradle 3I. The cradle 3I also supports a stepping motor 3J which drives the lead screw 3H thereby moving the carriage 3C in the Y direction along slide members 3K forming part of the cradle 3I.

The cradle 3I is pivotted about the axis 14 on trunnions 3L one of which is driven by a stepping motor 3M so as to rotate the cradle 3I, the carriage 3C and the baseboard 3 about the axis 14.

The stepping motors used in the illustrated embodiment of the invention are joined by flexible cables (not shown) to a control system which can be operated either manually or automatically to drive each motor through a specified number of incremented steps so as to make the adjustments required for a particular photographic print. In an alternative embodiment of the invention the motors could be replaced by knobs for manipulation by an operator to carry out the required adjustments.

The baseboard 3 can be adjusted in two orthogonal horizontal directions by sliding in the X and Y directions as indicated in Figures 1 and 2. A suitable sliding mount for the baseboard is provided for this purpose though it is not illustrated in the drawings. The baseboard 3 can also be tilted from its illustrated horizontal position about a horizontal axis 12.

CLAIMS:

1. A photographic enlarger comprising a light source (8) for providing a beam of light along an optical path, a holder (10) for supporting a negative in the said light path, focussing means (5) for focussing light after passage through the negative and a support (3) for supporting a light sensitive element where it can be exposed to light focussed by the lens focussing means characterised by means (7B,3M) for tilting the negative holder and the support about respective axes transverse to the light path and means (5B) for adjusting the focussing means laterally with respect to the light path.

2. An enlarger according to claim 1 characterised by means (10A) for rotating the holder for the negative about an axis substantially parallel to the light path or substantially perpendicular to the plane of the negative.

3. An enlarger according to claim 1 or 2 characterised by means (3D,3J) for moving the support in two orthogonal directions parallel to the photosenstive member, when the latter is in position, or perpendicular to the light path.

4. An enlarger according to any preceding claim characterised by means (6D) for adjusting a distance between the negative holder and the support.

5. An enlarger according to any preceding claim characterised by means (40) for adjusting a distance between the focussing means and the support.

0083853

FIG. 1.

0083853

FIG. 2A

FIG. 2.